# EUROPEAN PATENT APPLICATION

(11) **EP 1 841 134 A1**
(43) Date of publication of application: **03.10.2007**
(21) Application number: 06112132.3
(22) Date of filing: 31.03.2006
(51) Int. Cl.: H04L 12/26, H04Q 7/34, H04L 12/24

(54) **Analysis system and method of analysing performance**

(71) Applicant: Agilent Technologies, Inc., Santa Clara, CA 95051 (US)
(72) Inventor: Dunbar, Jonathan, South Queensferry, Lothian EH30 9TG (GB)
(74) Representative: Coker, David Graeme

(57) **Abstract**

An analysis system for a communications network (100) comprises a user feedback entity, for example a call centre or an automated data information collection system, that is capable of receiving information from a user as a result of the user attaining an unsatisfactory level of performance in relation to use of communications handset (118). The unsatisfactory level of performance is a subjective assessment by the user. A measurement server (134) initiates communication of a measurement by an agent entity (202) on the communications handset (118) for the purpose of identifying a cause of the unsatisfactory level of performance. The initiation of the communication of the measurement by the agent entity (202) is carried out in response to the receipt of the information from the user.

## Description

The present invention relates to an analysis system of the type that, for example, uses an agent entity on a communications device in order to obtain measurement data in relation to the communications device. The present invention also relates to a method of analysing performance of the type that, for example, uses an agent entity on a communications device in order to obtain measurement data in relation to the communications device.

### Background Art

In the field of network performance monitoring, it is known to employ so-called "Operations Support Systems" monitoring systems in order to obtain diagnostic data to detect and troubleshoot performance problems in a communications network. In this respect, some performance problems are drawn to the attention of a network operator by a subscriber or user of a communications device, for example a cellular communications handset. In order to identify a cause of a given performance problem in the communications network, it is also known to provide the communications device with a software probe agent as described in US patent publication number US 2003/0134631 A1. The software probe agent continuously reports measurement results to a central monitoring system in order to provide additional information to engineers from a perspective of experiences at the communications device in order to identify the cause of the given performance problem.

However, due to the continuous communication of the measurement results by the software probe agent, valuable resources of the communications device are used and available network resources in terms of available bandwidth are reduced, especially due to the possibility of a large number of the software probe agents that can be simultaneously employed in the communications network.

### Disclosure of Invention

According to a first aspect of the present invention, there is provided an analysis system for a communications network, the system comprising: a user feedback entity arranged to receive information from a user as a result of the user attaining a subjectively unsatisfactory level of performance in relation to a communications device; and a processing resource arranged to initiate communication of a measurement by an agent entity on the communications device for identifying a cause of the unsatisfactory level of performance, the initiation of the communication of the measurement by the agent entity being in response to the receipt of the information from the user.

The processing resource may be arranged to initiate performance of the measurement.

The initiation of the communication of the measurement by the agent entity may include deployment of the measurement entity to the communications device.

The initiation of the communication of the measurement by the agent entity may include communication of configuration data to the communications device in order to configure the agent entity.

The agent entity may be a software probe agent.

The user feedback entity may be a call centre.

The user feedback entity may be an automated call handling system.

The unsatisfactory level of performance may be an unsatisfactory quality of service experienced by the user.

The unsatisfactory level of performance may be as perceived by the user.

According to a second aspect of the present invention, there is provided a method of analysing performance for a communications network, the method comprising: receiving information from a user as a result of the user attaining a subjectively unsatisfactory level of performance in relation to a communications device; and initiating communication of a measurement by an agent entity on the communications device for identifying a cause of the unsatisfactory level of performance, the initiation of the communication of the measurement by the agent entity being in response to the receipt of the information from the user.

According to a third aspect of the invention, there is provided a computer program code element comprising computer program code means to make a computer execute the method as set forth above in relation to the second aspect of the invention.

The computer program code element may be embodied on a computer readable medium.

It is thus possible to provide an analysis system and method of analysing performance capable of obtaining measurement data on an on-demand basis to supplement measurements made by measurement systems in a communications network. The measurement data obtained is from a remote location, namely a communications device without unnecessarily consuming processing resources of the communications device or bandwidth of the communications network.

### Brief Description of Drawings

At least one embodiment of the invention will now be described, by way of example only, with reference to the accompanying drawings, in which:
Figure 1 is a schematic diagram of a communications network comprising an analysis system constituting an embodiment of the invention;
Figure 2 is a schematic diagram of a communications device of Figure 1;
Figure 3 is a schematic diagram of a measurement server and a customer care application server of Figure 1; and
Figure 4 is a flow diagram of a method of analysing performance for use by the system in Figure 1.

### Detailed Description

Throughout the following description identical reference numerals will be used to identify like parts.

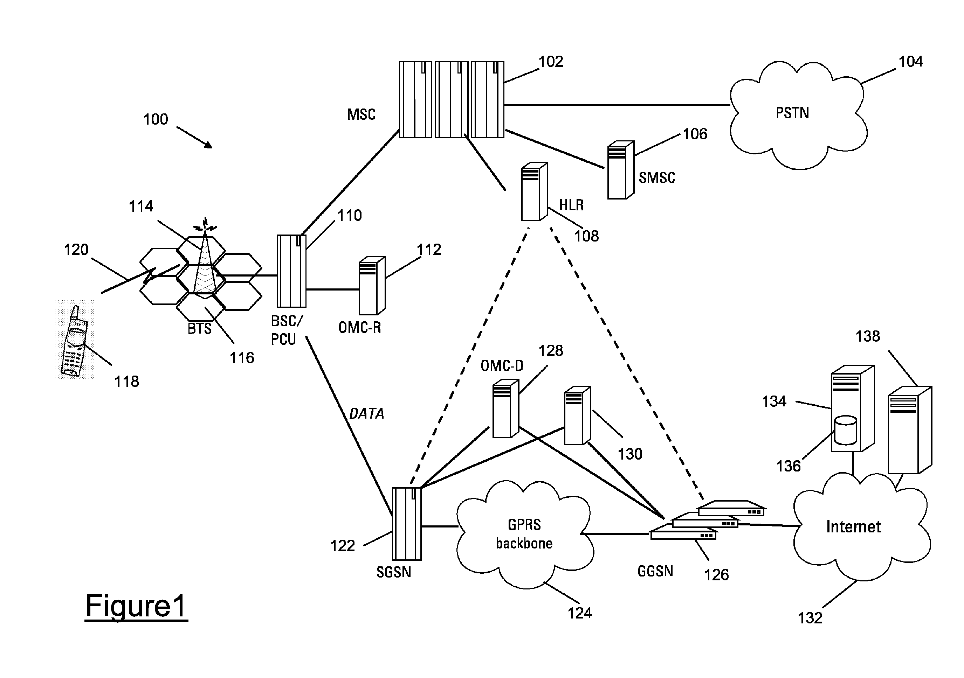

Referring to Figure 1, a monitoring system is implemented in a wireless communications network 100, the communications network 100 being, in this example, a Global Systems for Mobile Communications (GSM) network. The communication network 100 is capable of providing or facilitating voice communication and/or data transactions, services, or communications. The skilled person will, of course, appreciate that other communications networks can be used in place of or overlay the GSM communications network described herein, for example other telecommunication networks such as a Universal Mobile Telecommunications System (UMTS) network, wireless networks, wireline telephone networks and data communication networks.

For the sake of conciseness of description and hence ease of understanding, the GSM communications network is not described in detail, but the skilled person will recognise that the GSM communications network comprises other functional and structural aspects not described herein.

Referring again to Figure 1, the communications network 100 comprises a Mobile Switching Centre (MSC) 102 coupled to a Public Switched Telephone Network (PSTN) 104, a Short Messaging Service Centre (SMSC) node 106, a Home Location Register (HLR) 108 and a Base Station Controller (BSC) 110 that also has functionality so as to serve as a Packet Control Unit (PCU) to support the GPRS. The BSC 110 is coupled to an Operations and Maintenance Centre-Radio (OMC-R) 112 and a base station 114, the base station 114 supporting a number of cells 116 in one of which a communications apparatus, for example a communications terminal, such as a cellular communications handset 118, is located for communication with the communications network 100. The communications handset 118 is capable of communicating with the base station 114 via a Radio-Frequency (RF) interface 120. The communications handset 118 can be any device having a user interface capability associated with it, a network connectivity capability and an ability to accept software applications such as an agent entity, for example a software probe application, as described later herein. Examples of other communications apparatus include, but are not limited to, wireless communication devices, telematics devices or modules, Personal Computers (PCs), consumer appliances such as set-top boxes, and/or Personal Digital Assistants (PDAs).

In addition to being coupled to the base station 114, the BSC 110 is also coupled to a Serving GPRS Support Node (SGSN) 122, the HLR 108 being capable of communicating with the SGSN 122. The SGSN 122 is also coupled to a GPRS backbone network 124, the GPRS backbone network 124 being coupled to a Gateway GPRS Support Node (GGSN) 126. Both the SGSN 122 and the GGSN 126 are also coupled to an Operations and Maintenance Centre-Data (OMC-D) 128 and a charging gateway 130. The HLR 108 is also capable of communicating with the GGSN 126.

The GGSN 126 is coupled to, in this example, a data communications network, for example an Internet 132, a measurement server 134 also being coupled to the Internet 132. The measurement server 134 comprises a persistent store, for example a first database 136, though the persistent store can be remotely located from the measurement server 134. The measurement server 134 is, in this example, able to send measurement data to the persistent store for subsequent retrieval. A customer care application server 138 is also coupled to the Internet 132 and capable of communicating with the measurement server 134 via the Internet 132.

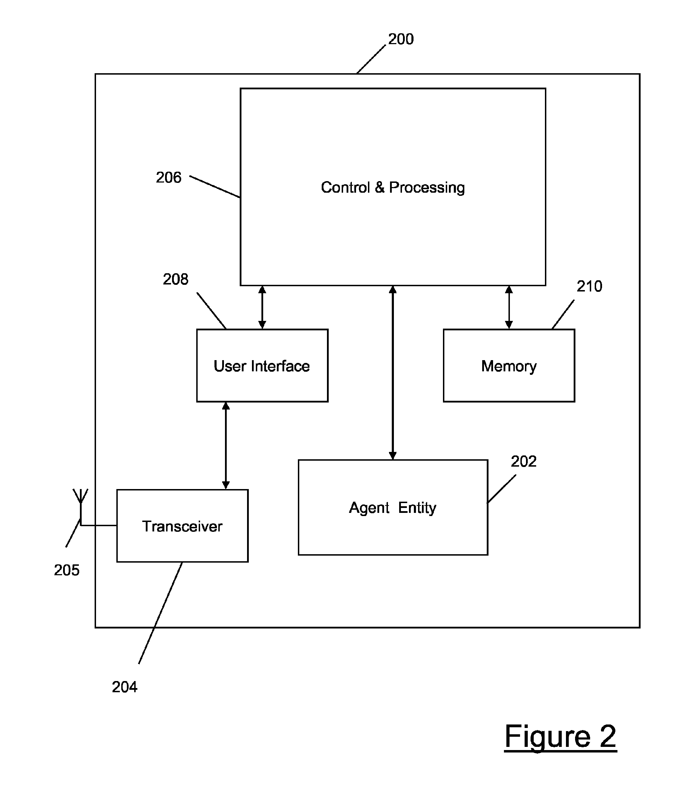

Turning to Figure 2, the communications handset 118 comprises a processing resource 200, such as a chipset, capable of supporting the agent entity 202, when present on the communications handset 118, and thus functioning as a probe. The communications handset 118, of course, is also operable to function in the communications network 100.

The agent entity 202 is of the type described in US patent publication number US 2003/0134631 A1. The skilled person will, of course, realise that some of the functionality of US 2003/0134631 does not have to be employed and is application specific. The agent entity 202 is able to monitor, measure and capture transactions occurring in the communications network 100, as seen from the perspective of a user of the communications handset 118, and then provide this measurement data to the monitoring server 134 via a communications link using the RF interface 120. The communications link can be any means suitable for communicating between the communications handset 118 and the measurement server 134 via the communications network 100 and thus include, by way of example and not limitation, wireless, Internet and/or virtual private network (VPN) tunnelling. For example, the communications link can be an Internet link to a public or private network server or it can be a private network medium to a private network, as in the case of a virtual private network (VPN) tunnel to a server residing at a corporate intranet site or it can be an HTTP connection via the Internet to the measurement server 134. The measurement values of the measurement data can be in CSV (Comma Separated Values) format passed in an HTTP POST parameter list. The user interaction data can optionally be encrypted; encryption can be necessary in environments in which user and data privacy is a concern.

The measurement data can be network engineering metric data and/or user profile data and can be used to analyse and/or optimise functionality and quality of the communications network 100 as seen by the user of the communications handset 118. Operation and quality of the communications network 100 is managed by a network operator (not shown).

In this example, the processing resource 200 also supports: a transceiver element 204 coupled to an antenna 205 and having both receiver and transmitter functionality for facilitating communications between the communications handset 118 and the communications network 100; a controller and processing capability, such as embedded JAVA processing, which together can be referred to as a control and processing element 206; a user interface element 208, such as a keypad, a microphone, a loudspeaker and/or a display screen, to allow the user to both send and receive communications and transactions in the communications network 100 via the communications handset 118. In this respect, communications engaged in by the user of the communications handset 118 can be manifested as voice and/or data transactions between the user and the communications network 100 via the user interface 208.

The processing resource 200 further comprises a memory element 210, such as a buffer, for storing, at least temporarily, transaction data that is monitored, measured and captured by the communication device prior to it being transmitted to the measurement server 134. The user interface element 208 can have an ability to monitor key presses made by the user, recognise voice activity of the user, and an ability to create a data file of the actual user experience on the communications handset 118.

The agent entity 202 is dynamically and remotely configurable so as to define how the agent entity 202 monitors, measures and/or captures at least some portion of the characteristics of the transactions in which the user engages, from the perspective of the user, as the measurement data. The functionality of the agent entity 202 is performed in accordance with a functional definition of the agent entity 202 that can be, for example, dynamically and remotely configured, added to, changed, deleted and/or upgraded at will via the communications link by the network operator or other party interested in controlling operation of the agent entity 202. The measurement data collected by the agent entity 202, as mentioned above, can be temporarily stored in the memory 210, the control and processing element 206 providing control of other elements in the communications handset 118 and processing capability required by the agent entity 202.

The agent entity 202 can be considered a third party (3P) application capable of residing and operating within the communications handset 118. The software of the agent entity 202 can be implemented in any desired format, for example an open-development environment that facilitates the development of portable 3P applications. Examples of acceptable application and/or programming platforms and environments suitable for implementation of the probe element include, but are not limited to, the following: Sun JAVA (J2ME), C, C++, Qualcomm Binary Runtime Environment for Wireless (BREW) application environment, Microsoft Stinger, Symbian operating system, or proprietary third party operating systems, environments, and/or programming languages. The agent entity 202, which can include diagnostic criterion for performing network diagnostics, can be downloaded from the network operator to the communications handset 118 via the communications link, such as over the Internet 132. The agent entity 202 can have an identification element, such as a control or serial number, which can be used to associate a particular instantiation of the agent entity 202 with a particular network subscriber or communications device. Of course, if desired, the agent entity 202 can be provided in a pre-configured form in the communications handset 118 as, for example, a logic circuit.

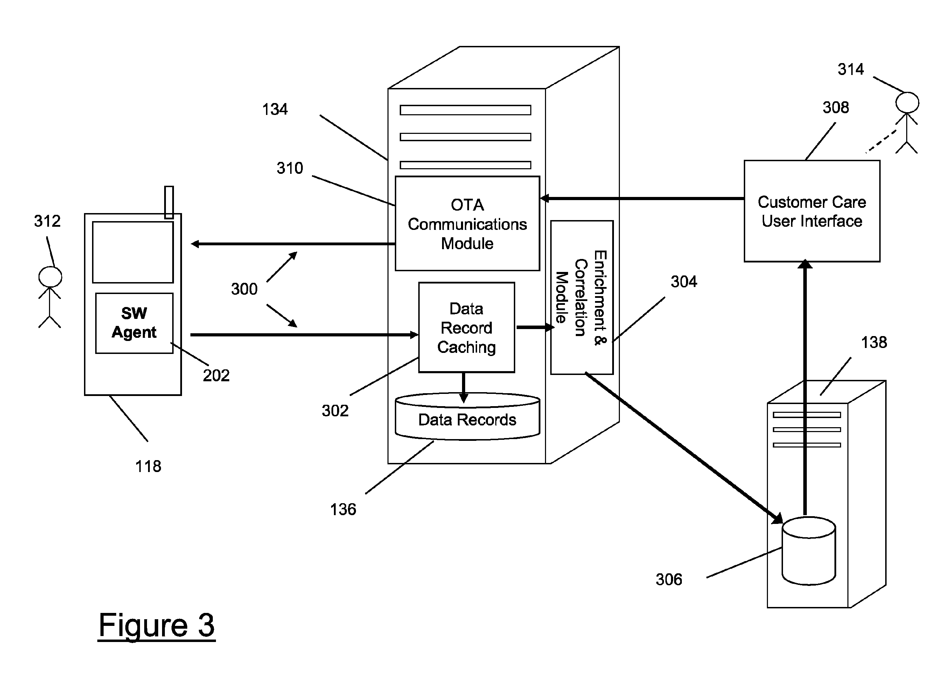

Turning to Figure 3, as mentioned above, the communications handset 118 is capable of communicating with the measurement server 134 using the communications link 300 supported by the communications network 100. The measurement server 134 comprises a second processing resource capable of supporting a data record caching module 302 capable of accessing the first database 136 and communicating with an enrichment and correlation module 304, the enrichment and correlation module 304 also being supported by the second processing resource.

Via the Internet 132, the enrichment and correlation module 304 is capable of accessing a second database 306 of the customer care application server 138. The customer care application server 138 is also accessible via, in this example, a web-based user interface 308. The user interface 308 is also capable of communicating with an Over-The-Air (OTA) communications module 310 supported by the second processing resource of the measurement server 134.

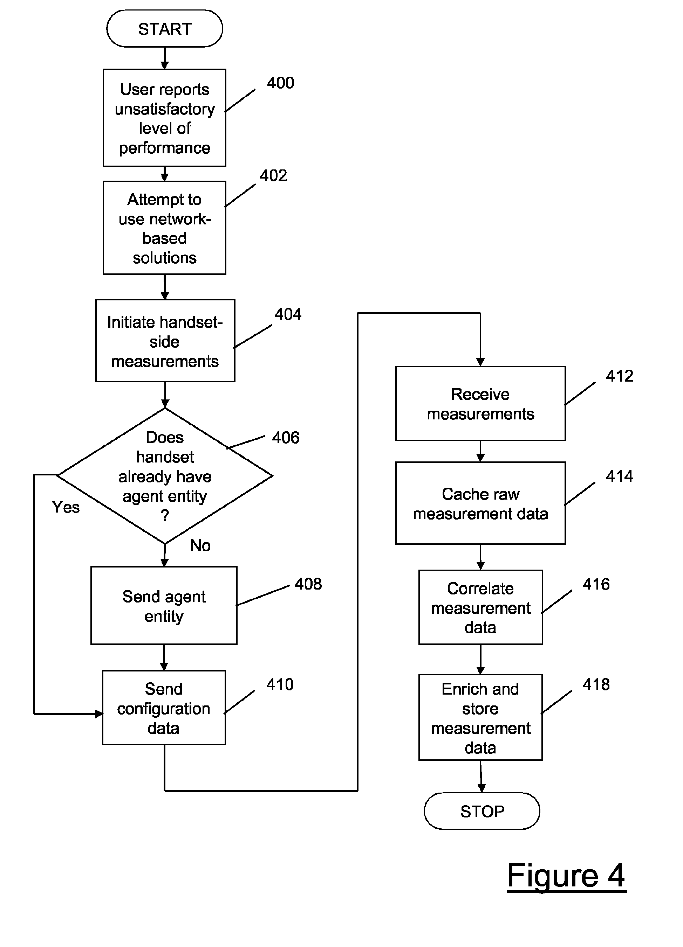

In operation (Figures 3 and 4), a user 312 of the communications handset 118 contacts a user feedback entity, for example a call centre for handling customer service requests, in order to report (Step 400) a problem. However, the skilled person will appreciate that the user feedback entity can be an automated call handling system capable of recording the problem identified by the user, for example by using a so-called touch-tone keypad.

The problem is, in this example, communicated (Step 400) by the user 312 as a subjectively unsatisfactory level of performance being experienced by the user 312. A customer support representative 314 (or engineer) uses (Step 402) network-based diagnostic systems to identify a cause of the unsatisfactory level of performance being experienced by the user 312.

In the event that the cause of the unsatisfactory level of performance being experienced by the user 312 cannot be determined by the network-based diagnostic systems, the customer service representative 314 (or engineer), via the user interface 308, initiates (Step 404) measurement by the agent entity 202. In this respect, the user interface 308 communicates an instruction, in this example, to the OTA communications module 310 of the measurement server 134. The OTA communications module 310 then firstly determines (Step 406) whether the agent entity 202 currently resides on the communications handset 118. In the event that the communications handset 118 is not currently supporting the agent entity 202, the measurement server 134 determines whether the communications handset 118 is capable of supporting the agent entity 202. If the communications handset 118 is capable of supporting the agent entity 202, the OTA communications module 310 of the measurement server 134 sends (Step 408) the agent entity 202 to the communications handset 118 via the communications link 300, the communications handset 118 installing the agent entity 202.

Once the communications handset 118 has received and installed the agent entity 202, or where the agent entity 202 is pre-installed on the communications handset 118, the OTA communications module 310 sends (Step 410) configuration data to the agent entity 202 in order to configure the agent entity 202 to perform measurements required by the measurement server 134, for example one or more of the following metrics: cell ID, outbound call connect time, TCP transmit rate, SMS send time, e-mail send time, HTTP page download state, signal strength, call fail event, browser application usage and/or reported error codes.

Subsequently, the agent entity 202 performs the measurements in accordance with the configuration specified by the configuration data. The measurement data, in this example, includes identification data, such as an International Mobile Equipment Identifier (IMEI) or an International Mobile Subscriber Identifier (IMSI) number in order to identify the communications handset 118 or a Subscriber Identity Module (SIM) card installed in the communications handset 118; the measurement data is communicated to the measurement server 134 via the communications link 300 for receipt (Step 412) by the data record caching module 302 in order to store (Step 414) the raw measurement data in the first database 136.

The measurement data is also passed by the data caching module 312 to the enrichment and correlation module 304. The enrichment and correlation module 304 has access to an identifier database (not shown) containing associations between identification data and identities of users or subscribers, for example subscriber names and/or telephone numbers. The enrichment and correlation module 304 uses the identifier database in order to correlate (Step 416) the identification data contained in the measurement data and an identity of the user 312 that is in a form, such as the name or the telephone number, that is readily understood and identified by the customer services representative 314, i.e. user-friendly.

Once retrieved from the identifier database, the measurement data is enriched (Step 418) with the identity information and stored (Step 418) in the second database 306. In order to provide the measurement data with meaning for the customer services representative 314 or the engineer, the identifier database also contains associations between descriptors that are understandable by the customer services representative 314 or the engineer and measurement data results. Consequently, in order to be as user-friendly as possible, the enrichment and correlation module 304 correlates (Step 416) the measurement data with an appropriate descriptor acquired from the identifier database and enriches (Step 418) the measurement data by storing (Step 418) the appropriate descriptor with the measurement data in the second database 306, thereby recording an association between the appropriate descriptor and the measurement data.

Using the name or telephone number of the user, the customer services representative 314 (or the engineer) is able to retrieve the measurement data from the second database 306, relating to the user 312, via the user interface 308 along with the descriptor stored by the correlation and enrichment module 304. Consequently, presented with the descriptor, the customer services representative 314, using previously acquired training, is able to advise the user 312 and hopefully resolve the problem reported by the user 312.

In another embodiment, the agent entity 202 may already be performing measurements on the communications handset 118. In this respect, the measurements being performed can include a measurement required by the customer services representative 314 (or the engineer). In such circumstances, the measurement server 134 can be arranged to instruct the agent entity 202 simply to communicate the measurement required, or in the event that the measurement required is not currently being performed by the agent entity 202, the measurement server 134 can instruct the agent entity 202 to perform the required measurement for subsequent communication. Furthermore, it should be appreciated that, in a further embodiment, the communication of the (required) measurement can be by display of the measurement by the communications handset 118 to the user 312 for subsequent (oral) communication by the user 312 to the customer services representative (or engineer). The measurement communicated in this way can optionally be communicated to the measurement server 134 by the customer services representative 314 (or engineer) using, for example, the user interface 308.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. An analysis system for a communications network, the system comprising:
a user feedback entity (138) arranged to receive information from a user as a result of the user (312) attaining a subjectively unsatisfactory level of performance in relation to a communications device (118); and
a processing resource arranged to initiate communication of a measurement by an agent entity (202) on the communications device (118) for identifying a cause of the unsatisfactory level of performance, the initiation of the communication of the measurement by the agent entity (202) being in response to the receipt of the information from the user (312).

2. A system as claimed in Claim 1, wherein the initiation of the communication of the measurement by the agent entity (202) includes deployment of the measurement entity to the communications device (118).

3. A system as claimed in Claim 1 or Claim 2, wherein the initiation of the communication of the measurement by the agent entity (202) includes communication of configuration data to the communications device (118) in order to configure the agent entity (202).

4. A system as claimed in Claim 1 or Claim 2 or Claim 3, wherein the agent entity (202) is a software probe agent.

5. A system as claimed in any one of the preceding claims, wherein the user feedback entity is a call centre.

6. A system as claimed in any one of Claims 1 to 4, wherein the user feedback entity is an automated call handling system.

7. A system as claimed in any one of the preceding claims, wherein the unsatisfactory level of performance is an unsatisfactory quality of service experienced by the user (312).

8. A method of analysing performance for a communications network, the method comprising:
receiving (400) information from a user (312) as a result of the user (312) attaining a subjectively unsatisfactory level of performance in relation to a communications device (118); and
initiating communication (412) of the measurement by an agent entity (202) on the communications device (118) for identifying a cause of the unsatisfactory level of performance, the initiation of the communication of the measurement by the agent entity (202) being in response to the receipt of the information from the user (312).

9. A computer program code element comprising computer program code means to make a computer execute the method of Claim 8.

10. A computer program code element as claimed in Claim 9, embodied on a computer readable medium.

## Amended claims

### Amended claims in accordance with Rule 86(2) EPC.

**1.** An analysis system for a communications network, the system comprising:
a user feedback entity arranged to receive information from a user as a result of the user attaining a subjectively unsatisfactory level of performance in relation to a communications device; and
a processing resource arranged to initiate communication of a measurement by an agent entity on the communications device for identifying a cause of the unsatisfactory level of performance, the initiation of the communication of the measurement by the agent entity being in response to the receipt of the information from the user; wherein
the processing resource is arranged to enrich the measurement with identity information.

**2.** A system as claimed in Claim 1, wherein the agent entity has an identification element to associate, when in use, an instantiation of the agent entity with a subscriber network or a communications device.

**3.** A system as claimed in Claim 1 or Claim 2, wherein the initiation of the communication of the measurement by the agent entity includes deployment of the measurement entity to the communications device.

**4.** A system as claimed in Claim 1 or Claim 2 or Claim 3, wherein the processing resource is arranged, when in use, to correlate the measurement with a descriptor obtained from an identifier database and enrich the measurement with the descriptor.

**5.** A system as claimed in any one of the preceding claims, wherein the agent entity is a software probe agent.

**6.** A system as claimed in any one of the preceding claims, wherein the measurement is one or more of the following metrics:
cell ID, outbound call connection time, TCP transmit time, SMS send time, e-mail send time, HTTP page download state, signal strength, call fail event, browser application usage and/or reported error codes.

**7.** A system as claimed in any one of the preceding claims, wherein the unsatisfactory level of performance is an unsatisfactory quality of service experienced by the user.

**8.** A method of analysing performance for a communications network, the method comprising:
receiving information from a user as a result of the user attaining a subjectively unsatisfactory level of performance in relation to a communications device;
initiating communication of the measurement by an agent entity on the communications device for identifying a cause of the unsatisfactory level of performance, the initiation of the communication of the measurement by the agent entity being in response to the receipt of the information from the user; and
enriching the measurement with identity information.

**9.** A computer program code element comprising computer program code means to make a computer execute the method of Claim 8.

**10.** A computer program code element as claimed in Claim 9, embodied on a computer readable medium.
